# EUROPEAN PATENT SPECIFICATION

(11) **EP 1 065 444 B1**
(45) Date of publication and mention of the grant of the patent: **01.12.2010**
(21) Application number: 99959931.9
(22) Date of filing: 20.12.1999
(51) Int. Cl.: F23J 15/04

(54) **Method for reducing the temperature of exhaust gas utilizing hot water**
Verfahren zur Reduzierung der Abgastemperatur mittels Warmwasser
Procédé pour réduire la temperature de gaz d'échappement avec de l'eau chaude

(30) Priority: 18.01.1999 JP 884799
(43) Date of publication of application: 03.01.2001
(73) Proprietor: TAKUMA CO., LTD., Osaka-shi, Osaka 530-0004 (JP)
(72) Inventor: KUMADA, Masayuki, Takuma Co., Ltd, Amagasaki-shi, Hyogo 660-0806 (JP); MUKAI, Keiji, Takuma Co., Ltd, Amagasaki-shi, Hyogo 660-0806 (JP)
(74) Representative: Bradley, Adrian
(86) International application number: PCT/JP1999/007162
(87) International publication number: WO 2000/042359

(56) References cited:
- EP-A- 0 828 550
- JP-A- 9 187 615
- JP-A- 9 250 722
- US-A- 4 804 521
- US-A- 5 560 894

## Description

### Technical Field of the Invention

This invention relates to the treatment of exhaust gas emitted from combustion systems such as waste incinerators, boilers and the like, and more particularly to an improved method for reducing the temperature of exhaust gas to substantially reduce the size of the device, to protect a gas cooling chamber or an exhaust gas duct from damage caused by sprayed water, to eliminate operational difficulties caused by the deposit of dust, and also to remove acid gas contained in exhaust gas.

### Background of the Invention

Conventionally, exhaust gas emitted from a combustion system such as a waste incinerator, a boiler or the like is diffused in the atmosphere after being purified by a gas purification device.

In some purification treatments, it is necessary to reduce the temperature of the exhaust gas to an appropriate temperature, for example, approximately 120 - 250°C, depending on the gas purification device. Conventionally, in such cases, water is sprayed into the exhaust gas to utilise the sensible heat and latent heat of evaporation of the water to reduce the temperature of exhaust gas.

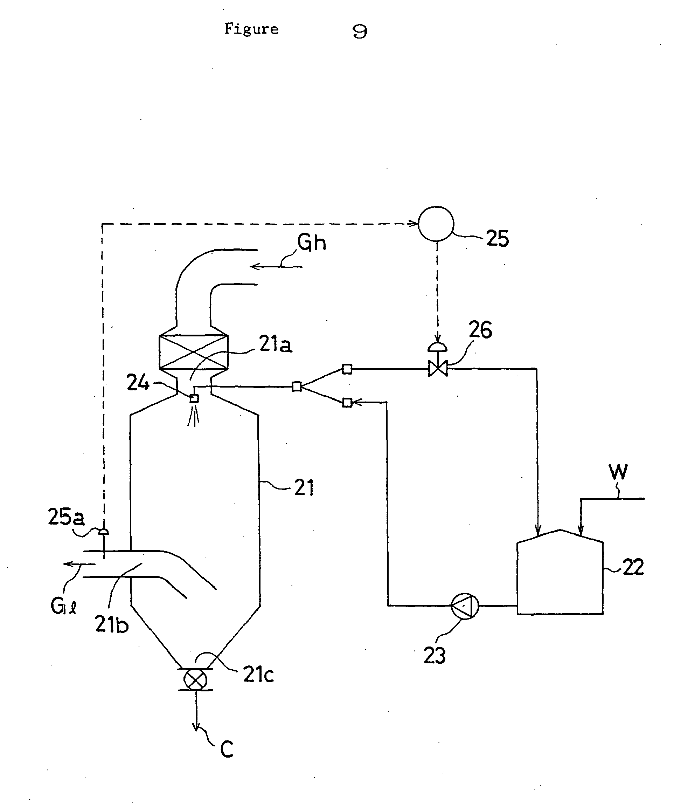

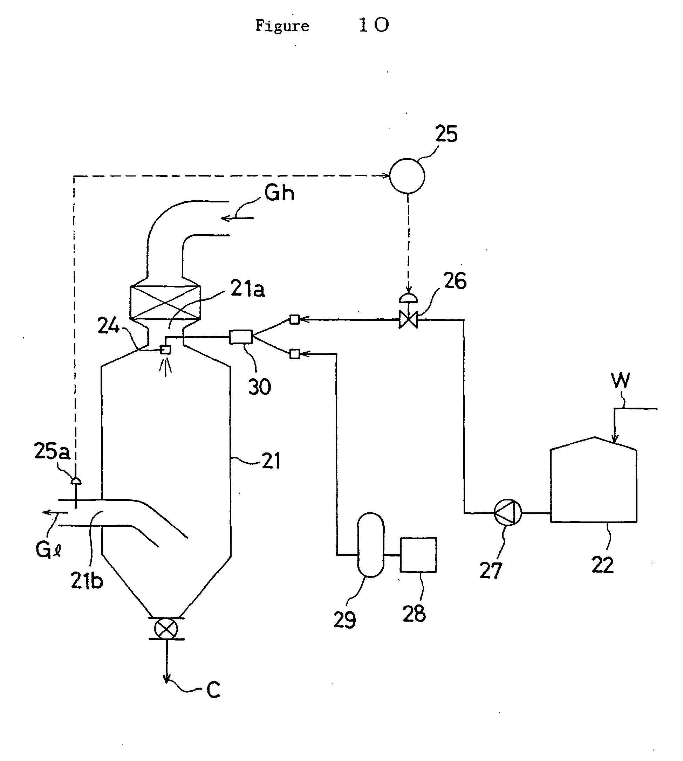

Referring to Fig.9 and Fig. 10, there are shown samples of a conventional device to reduce the temperature of exhaust gas, wherein 21 is a gas cooling chamber, 21 a an exhaust gas inlet, 21 b an exhaust gas outlet, 21c an ash outlet, 22 a temperature reduction water tank, 23 a pressure pump, 24 a temperature reduction water nozzle, 25 a temperature control device, 25a a temperature detector, 26 a temperature reduction water volume control valve, 27 an injection pump, 28 an air compressor, 29 a compressed air tank, 30 a mixer, Gh high temperature exhaust gas, Gl low temperature exhaust gas and C ash.

With reference to the device for reducing the temperature of exhaust gas in Fig.9, high pressure water from the temperature reduction water tank 22 pressurised by the pressure pump 23 is sprayed into the gas cooling chamber 21 through the temperature reduction water nozzle 24 equipped in the vicinity of the exhaust gas inlet 21a. The temperature of sprayed water rises in contact with high temperature exhaust gas Gh, and is vaporised to become vapour steam when it reaches a boiling point.

High temperature exhaust gas Gh in the gas cooling chamber 21 is cooled by the sensible heat of sprayed water, the latent heat of evaporation of the water and the sensible heat of the vapour steam, thus lowering the temperature to a prescribed temperature so as to be led out of the exhaust gas outlet. The volume of water to be sprayed into the gas cooling chamber 21 is controlled by adjusting the opening of the temperature reduction water volume control valve 26 through the temperature control device 25 by means of temperature detecting signals from the temperature detector 25a. The temperature of low temperature exhaust gas Gl led out of the exhaust gas outlet 21b is maintained at a desired temperature by controlling water volume to be sprayed into the gas cooling chamber 21 by means of controlling the volume of water returned to the temperature reduction water tank 22.

With reference to the device for reducing the temperature of exhaust gas shown in Fig. 10, water sent from the temperature reduction water tank 22 by means of the injection pump 27 and high pressured air sent from the compressed air tank 29 are mixed for atomisation in the mixer 30. Atomised water is sprayed into the gas cooling chamber 21 through the temperature reduction water nozzle equipped in the vicinity of the exhaust gas inlet 21a from the mixer 30.

Functions such as that the temperature of sprayed water rises in contact with high pressure exhaust gas Gh and is vaporised to become vapour steam when reached a boiling point, that high temperature exhaust gas Gh in the gas cooling chamber 21 is cooled by the sensible heat of the sprayed water, the evaporated latent heat and the sensible heat of the steam, that water volume to be sprayed into the gas cooling chamber 21 is controlled by adjusting the opening of the temperature reduction water volume control valve 26 through the temperature control device 25, and that the temperature of low temperature exhaust gas Gl is maintained at a desired temperature by controlling water volume to be sprayed are precisely same as those in Fig. 9. The previous devices for the temperature reduction of exhaust gas shown in Figures 9 and 10 is capable of reducing the temperature of high temperature exhaust gas Gh to a desired temperature by utilising low cost water, thus achieving excellent and practical effects.

The document US 5560894 discloses a process for the treatment of exhaust gas by a semidry method in which acidic gas, such as SOₓ, NOₓ, HF, and HCL can be efficiently removed without the discharge of liquid effluent. The exhaust gas is brought into contact with an absorbent slurry containing alkaline compounds, the preparation of which are detailed. This document docs not however discuss the injection temperatures or pressures of the slurry into the reactor containing the exhaust gas.

Other techniques for semidry exhaust gas treatment are disclosed in which slurry is forced through an atomizer and into a reactor. The water constituent of the slurry then evaporates, thus lowering the temperature of the exhaust gas.

There remain, however, a number of difficulties related to the aforementioned previous devices of temperature reduction of exhaust gas, of which major ones are (a) a refractory is damaged by downflow of water droplets when they hit the wall surface of the gas cooling chaser directly, and stable operation of the gas cooling chamber is impaired by dust adhered to and deposited at the wall surface, (b) to provide a device for temperature reduction of exhaust gas having a small size cannot be achieved since the gas cooling chamber remains large in size.

In the event of a single fluid method wherein only water is utilised as shown in Fig. 9, difficulties remain to make temperature reduction water atomised having particles of miero-sized diameters even by casing the pressure of temperature reduction water or making some improvements on a temperature reduction water nozzle 24. With this method, the diameters of atomised particles of temperature reduction water normally stay coarse having diameters around 70 - 200µm, which make it difficult that atomised temperature reduction water is thoroughly vaporised within a limited space, thus causing damages to the refractory when water droplets hit the wall surface of the gas cooling chamber directly.

Even when damages to a refractory is avoided, there would be possibilities that dust is adhered to and deposited at the surface of the refractory wet with water droplets, and deposits adhered to the surface of the refractory gradually grow, and the passage resistance of exhaust gas in the gas cooling chamber increases and 4 fluctuate considerably, thus making the smooth operation of the gas cooling chamber difficult.

With a double fluid method shown in Fig. 10, wherein water and compressed air are employed, the diameters of atomised particles of temperature reduction water normally become around 30 - 100µm thus reducing the frequency of occurrence of the problems comparatively in comparison with the single fluid method.

However, this method is not ideal from the view point of costs because of high initial and running costs of compressed air equipment.

Further, time required before aforementioned atomised temperature reduction water reaches a boiling point and evaporates thoroughly is considerably long. This means that it becomes necessary that retention time of exhaust gas in a gas cooling chamber needs to be sufficiently long, thus requiring the gas cooling chamber of a large capacity.

For example, in the case of an industrial waste incinerator with a capacity to handle incineration disposal of industrial waste of approximately 300T/D, assuming that high temperature exhaust gas Gh with an exhaust gas volume of 90,000Nm³/H and an inlet exhaust gas temperature of 240°C is turned to low temperature exhaust gas Gl with an inlet gas temperature of 180°C, a gas cooling chamber of the internal diameter of approximately 4,800mm and the height of approximately 9,000mm is required when an device of temperature reduction of exhaust gas by menus of a single fluid method shown in Fig.9, thus making the total height of the device for temperature reduction of exhaust gas including an exhaust gas inlet 21a, an exhaust gas outlet 21b and an ash outlet 21c approximately 180,000 mm.

With designing the previous device for temperature reduction of exhaust gas, heat load of a gas cooling chamber is normally chosen at the value of 20934 - 41868 KJ/m³.H (5,000 - 10,000kcal/m³.H) (heat value taken away from exhaust gas per unit volume and unit time of a gas cooling chamber). For example, the heat load of the gas cooling chamber is chosen at 29307 KJ/m³.H (7,000kcal/m³.H).

### I Disclosure of the Invention (objects to be achieved)

The present invention is concerned with solving aforementioned problems with the previous device for temperature reduction of exhaust gas, namely, (a) that due to coarse particle diameters of atomised temperature reduction water, water droplets directly hitting the wall surface of the gas cooling chamber cause damages to the refractory and due to dust adhered to and deposited at the wall surface the smooth operation of the gas cooling chamber is disturbed with the single fluid method, (b) that a pressurised air equipment is required, thus increasing both initial and running costs with the double fluid method, and (c) that it becomes difficult to make the gas cooling chamber remarkably small in size due to the time consumed before atomised water particles evaporate. Accordingly, it is an object of the present invention to provide a method for effective and economical temperature reduction of exhaust gas having an exceedingly small size by means of reducing the diameters of atomised water particles.

### II Disclosure of the Invention (objects to be achieved)

The inventor of the present invention has acquired knowledge through designing, manufacturing and experimenting a numerous number of devices for temperature reduction of exhaust gas that with the device for temperature reduction of exhaust gas by a single fluid method wherein only water is employed, it is difficult to reduce the particle diameters of atomised temperature reduction water smaller than approximately 100µm just by providing an improved temperature reduction water nozzle or raising the pressure of temperature reduction water as long as a temperature reduction water nozzle is employed for atomisation, accordingly making it difficult to realise to provide a gas cooling chamber having a remarkably reduced volume.

The inventor of the present invention, therefore, has departed from the conventional idea of designing this type of device for temperature reduction of exhaust gas in prior art wherein water of normal temperature of approximately 20 - 30°C is employed as temperature reduction water, and the sensible heat of water and evaporation latent heat are effectively utilised, and has come to an idea that air-liquid of pressurised thermal water of a boiling point of water under atmospheric pressure or pressurised thermal water partly containing steam is atomised and injected through a temperature reduction nozzle.

When pressurised thermal water having a temperature higher than the boiling point of water under atmospheric pressure is used, the heat value equivalent to the sensible heat of water to be utilised for cooling of exhaust gas is reduced comparing with the case of the previous single fluid method, thus resulting in slightly increase of water volume.

However, when said pressurised thermal water is sprayed through a temperature reduction water nozzle into a gas cooling chamber, there occurs so-called boiling under reduced pressure in the vicinity of the outlet of temperature reduction water nozzle, and particle diameters of atomised water become micro-sized of approximately 3µm - 50µm, and rapidly evaporates within a short period of time in a gas cooling chamber, thus enabling to improve the cooling effect of exhaust gas and to make the size of a gas cooling chamber smaller in size.

The present invention has come into existence upon results of a numerous number of experiments related to temperature reduction of exhaust gas based on the aforementioned ideas and said ideas to overturn the conventional technical common sense or practices born by the inventor and others.

With reference to claim 1 according to the present invention, the basic constitution of the present invention relates to spraying, through a temperature reduction nozzle, pressurised thermal water with a temperature higher than the boiling point of water under atmospheric pressure as temperature reduction water into exhaust gas

With reference to claim 2 according to the present invention, a second embodiment of the present invention relates to spraying pressurised thermal water with the temperature higher than a boiling point of water under atmospheric pressure as temperature reduction water into a gas cooling chamber or an exhaust gas duct.

With the embodiments of the invention in claim 1 or claim 2, thermal water taken out of a deaerator or continuous blow water of a boiler is utilised as part of pressurised thermal water.

With the embodiments of the invention in claim 1, claim 2 or claim 3, pressurised thermal water partly containing steam is used as temperature reduction water.

With reference to claim 5 according to the present invention in claim I or claim 2, pressurised thermal water containing alkaline solution is used as temperature reduction water.

With reference to claim 6 according to the present invention in claim 5, heated alkaline solution is mixed into thermal water.

With reference to claim 7 according to the present invention in claim 5 or claim 6, alkaline solution is used as alkaline aqueous solution or alkaline slurry solution.

With reference to claim 8 according to the present invention in claim 7, alkaline aqueous solution is used as aqueous solution containing sodium hydroxide (caustic soda), and alkaline slurry solution is used as slurry solution containing calcium hydroxide (slaked lime).

Any combustion systems such as a waste incinerator, a boiler and the like can be the emission source of the aforementioned high temperature exhaust gas, and the present invention is applicable to temperature reduction of all kinds of exhaust gas from combustion.

The temperature of high temperature exhaust gas Gh supplied to a gas cooling chamber can be fixed at the temperature of 150 - 1000°C, and the temperature of low temperature exhaust gas Gl supplied from the gas cooling chamber can be fixed at the temperature higher than 100°C. For example, when the present invention is applied to primary cooling of exhaust gas, the temperature of high temperature exhaust gas Gh and the temperature of low temperature exhaust gas Gl can be fixed at approximately 900 - 1000 °C and 150 - 250 °C respectively. When the present invention is applied to secondary cooling of exhaust gas, the temperature of high temperature exhaust gas Gh and the temperature of low temperature exhaust gas Gl can be fixed at approximately 200 - 400°C and 120 - 250 °C respectively.

The aforementioned gas cooling chamber can be formed either in vertical shape or horizontal shape, and its cross section can be of any shape like a circle, an ellipse or a square.

Similarly, the form of the aforementioned exhaust gas duct can be either long sideways or short sideways, and its cross section can be of any shape like a circle, an ellipse or a square.

The aforementioned pressurised thermal water Wt is water maintained at the temperature higher than a boiling point of water (100 °C) under atmospheric pressure, or so-called water of high pressure and high temperature. The pressure of the pressurised thermal water Wt can be chosen at values of approximately 199 kPa - 9910 kPa (1Kg/cm²G - 100kg/cm² G). However, taking pressure resistance of a thermal tank 2 into consideration, it is desirable that it is chosen somewhere between 395 kPa - 1080 kPa (3 - 10 kg/cm²G).

Pressurised thermal water Wt can partly contain steam. However, less steam content is desirable.

For a heat source for producing thermal water, water vapour from a waste heat boiler can be utilised when the incinerator as a combustion system is equipped with a waste heat boiler, and part of vaporised steam can be utilised when the combustion system is a boiler.

With an incinerator not equipped with a waste heat boiler, either an exhaust heat exchanger is installed to utilise water vapour from the exchanger, or an independent steam or electric boiler of a small capacity can be installed.

When a deaerator is attached to the waste heat boiler of an incinerator or a boiler, thermal water produced in the deaerator can be used as temperature reduction water as it is. In this case, a device for temperature reduction can be constituted inexpensively due to the reason that all needed for the equipment for supplying thermal water Wt is installation of the pipe from the deaerator.

Further, in case that a boiler or an incinerator equipped with an waste heat boiler is used as a combustion system continuous blow water from the boiler can be utilised as part of thermal water to be used as temperature reduction water. With the majority of boiler equipment, it is designed that part of boiler water (thermal water) is discharged outside to stop the rise of concentration of a corrosion inhibitor and the like in boiler water so that a stable function of the corrosion inhibitor is performed. Boiler water discharged outside is normally found to be alkaline water of pH8.5 - 11.8, having dechlorination or desulfurisation effects. Therefore, when chemicals are used for dechlorination or desulfurisation of exhaust gas, the amount of chemicals can be reduced.

When a gas cooling chamber is of a vertical type, it is desired that a temperature reduction water nozzle for atomising pressurised thermal water is installed at a upper part and in the vicinity of a gas inlet for high temperature exhaust gas Gh. The installation position of a temperature reduction water nozzle can be chosen as desired depending on the type of a gas cooling chamber and the number of temperature reduction water nozzles to be installed. The same thing can be extended to the case wherein pressurised thermal water is injected inside an exhaust gas duct.

Any kinds of construction of a nozzle such as water spray nozzles, for example, of a screw type open to public or a collision type can be applied.

Further, the number of temperature reduction water nozzles can be chosen as desired depending on the shape of a gas cooling chamber or an exhaust gas duct, the number of ejection mouths installed at a nozzle, and the required ejection volume of thermal water and others. For example, with a device for temperature reduction of exhaust gas for the industrial waste incinerator in prior art {volume of incineration 300ton/D, volume of exhaust gas 90, 000Nm³/H, secondary cooling of exhaust gas (temperature of high temperature exhaust gas Gh 240°C and temperature of low temperature exhaust gas Gl 180°C), thermal water (saturated water of temperature 142.9°C and pressure 395 kPa (3kg/m²G)}, a temperature reduction water nozzle having three ejection mouths is installed at the upper part of the gas cooling chamber as described hereafter.

According to the present invention, the temperature and pressure of thermal water sprayed through a temperature reduction water nozzle become considerably higher than the boiling point of water under atmospheric pressure (100°C). Abrupt boiling under reduced pressure in the vicinity of an outlet of the nozzle ejection mouth produces micro-sized particles and becomes water vapour when instantly evaporated after spraying, thus causing no direct hitting of the wall surface of a gas cooling chamber without water droplets been evaporated.

The results, thus, enable a volume of the gas cooling chamber to be small, reducing installation costs and space. For example, with a device for temperature reduction of exhaust gas equipped on the outlet side of a waste gas boiler of the aforementioned previous industrial waste incinerator, when the temperature of high temperature exhaust gas is reduced from 240°C to 180°C, it is found the heat load of the gas cooling chamber being able to 2.09 x 10⁸ - 6.27 x 10⁸ J/m³.H (50,000 - 150,000kcal/m³.H).

Namely, comparing with the heat load (2.09 x 10⁷ - 4.18 x 10⁷ J/m³.H (5,000 - 10,000 kcal/m³.H)) of a gas cooling chamber in the previous device for temperature reduction of exhaust gas, the device for temperature reduction of exhaust gas in the present invention can be chosen at the range of 2.09 x 10⁸ - 6.27 x 10⁸ J/m³.H (50,000 - 150,000kcal/m³.H), thus enabling the volume of the gas cooling chamber to be reduced to 1/5 - 1/15.

Further, this invention allows that the device can be constituted so that thermal water is directly sprayed into a high temperature exhaust gas duct by inserting a temperature reduction water nozzle without providing a gas cooling chamber.

When thermal water is used as temperature reduction water, the volume of water sprayed increases slightly as compared with the case where low temperature water is used as conventionally practised due to the reason that the cooling capacity corresponding to the sensible heat is lowered. For example, when the temperature of temperature reduction water with the conventional device for temperature reduction of exhaust gas is kept at 20°C and the temperature of thermal water with the device for temperature reduction of exhaust gas according to the present invention at 142.9°C (saturated water of pressure 395 kPa (3kg/cm² G)), it is found that approximately 1.2 times the volume of thermal water is required. The increase, however, does not require the larger size of the pipe a thermal water line, thus requiring not much extra installation costs.

Thermal water mixed with alkaline solution as temperature reduction water is ejected into exhaust gas through a temperature reduction water nozzle to remove hydrogen chloride (HCl) or sulphur oxide (SO₂) contained in exhaust gas.

The aforementioned alkaline solution can be in the form of either alkaline aqueous solution or alkaline slurry solution.

The temperature of alkaline solution to be mixed in thermal water is not necessarily required to be raised by heating when the temperature of temperature reduction water mixed with said alkaline solution is higher than a boiling point of water under atmospheric pressure. It is, however, desirable that when the temperature of temperature reduction water becomes lower than a boiling point of water under atmospheric pressure by mixing alkaline solution, temperature reduction water is heated to a required temperature before alkaline solution is mixed into thermal water.

Any kind of alkaline agent in the aforementioned alkaline solution can be used. However, when it is used in the form of alkaline aqueous solution, sodium hydroxide (caustic soda, NaOH) or magnesium hydroxide (Mg(OH)₂) are preferable.

When alkaline slurry solution is in use, sodium hydroxide (slaked lime, Ca (OH)₂), quick lime (CaO), calcium carbonate (CaCO₃), sodium carbonate (Na₂CO₃) are preferable.

Total amount of alkaline agent in alkaline solution to be mixed into the aforementioned thermal water is appropriately adjusted depending on the type and removal quantity of acid gas in exhaust gas to be removed and the temperature of exhaust gas. Normally, alkaline agents of the equivalent ratio of 0.8 - 1.5 is mixed into thermal water.

### Brief Description of Drawings

Fig. 1 is a diagrammatic illustration of method and device for temperature reduction of exhaust gas to show an embodiment of the present invention.
Fig. 2 is a partly longitudinal sectional view of a temperature reduction water nozzle employed according to the present invention.
Fig. 3 is a view taken along the line I-I of Fig. 2.
Fig. 4 is a front view of method and device for temperature reduction of exhaust gas to show other embodiment of the present invention.
Fig. 5 is a view taken along the line I-I of Fig. 4.
Fig. 6 is a diagrammatical illustration of method and device for temperature reduction of exhaust gas to show other embodiment of the present invention when alkaline aqueous solution as alkaline solution is mixed into thermal water.
Fig. 7 is a diagrammatical illustration of method and device for temperature reduction of exhaust gas to show other embodiment of the present invention when alkaline slurry solution as alkaline solution is mixed into thermal water.
Fig. 8 is a curve to show a removal characteristic of acid gas in exhaust gas embodying the present invention.
Fig. 9 is a diagram to illustrate an device for temperature reduction of exhaust gas of the prior art.
Fig. 10 is a diagram to illustrate another device for temperature reduction of exhaust gas of the prior art.

### Description of Reference Characters

1 is a gas cooling chamber, 1a an exhaust gas inlet, 1b an exhaust gas outlet, 1c an ash outlet, 1d airtight retaining device, 2 a thermal water tank, 3 a pump, 4 a temperature reduction water nozzle, 4a an ejection mouth, 4b a main body, 4c a screw, 4d a water 19 lead-in hole, 5 a temperature control device, 5a an exhaust gas temperature detector on the outlet side, 6 a water reduction volume control valve, Gh high temperature exhaust gas, Gl low temperature exhaust gas, S heated steam, C ash, Wt thermal water, 7 a duct, 7a a flange for fixing a temperature reduction water nozzle, 7b a duct outlet, 8 an alkaline solution tank, 8b a stirrer, 9 an alkaline solution pump, 10 an alkaline solution flow volume control valve, 11 an alkaline solution heater, 11a a drain valve, 12 a mixer, 13 an acid gas concentration detector for low temperature exhaust gas, Wp alkaline solution, P alkaline agents, W1 water, and S1 steam for heating.

### Best Mode of Carrying Out the Invention

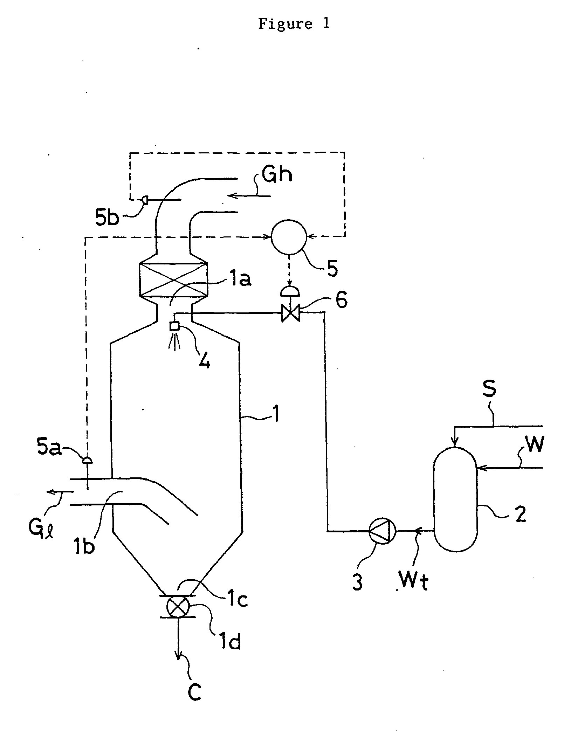

Referring to Fig.1, there is illustrated an embodiment of a method for temperature reduction of exhaust gas according to the present invention, wherein 1 designates a gas cooling chamber, 1a an exhaust gas inlet, 1b an exhaust gas outlet, 1c an ash outlet, 1d an airtight retaining device, 2 a thermal water tank, 3 a pump, 4 a temperature reduction water nozzle, 5 a temperature control device, 5a an exhaust gas temperature detector on the outlet side, 5b an exhaust gas temperature detector on the inlet side, 6 a temperature reduction water volume control valve, Gh high temperature exhaust gas, Gl low temperature exhaust gas, S heated steam, at thermal water, and C ash.

Referring now to Fig. 1, a gas cooling chamber 1 is in a form of so-called tower type in which a wall surface is formed with an diabetic structure by employing a heat insulating material open to the public.

There are equipped an exhaust gas outlet 1a on the upper part of a gas cooling chamber 1, an exhaust gas outlet 1b on the lower part, an ash outlet at the lower end of a reversed conical part downwards 1c, and an airtight retaining device (an open/closing damper) 1d respectively.

There is no need to say that the forms and sectional shapes of said gas cooling chamber other than one of the tower type illustrated in Fig. 1.

In reference to the embodiment in the present invention, high temperature exhaust gas Gh (temperature of approximately 240°C and a flow volume of approximately 90,000Nm³/H) emitted from a waste heat boiler (not illustrated) of an industrial waste incinerator is led into the aforementioned gas cooling chamber 1, approximately 150°C - 1000°C is the desired temperature for high temperature exhaust gas as an object of temperature reduction.

Further, exhaust gas as an object of temperature reduction can be exhaust gas from any combustion systems, and there is no specific condition on the flow volume.

A thermal water tank 2 is in the form of a heat and pressure resisting metal tank having a required capacity protected by a heat insulating material.

Water of high temperature (pressurised thermal water Wt) with the temperature higher than a boiling point (100°C) under atmospheric pressure is stored in said thermal tank 2. In the embodiment, thermal water Wt of high temperature and high pressure having the temperature of 142.0°C (saturated water at pressure 395 kPa (3kg/cm² G)) is stored in a thermal tank 2 with pressure resistance of 980 kPa (10kg/cm²).

In reference to Fig. 1, steam S for heating is led into a thermal tank 2 from a waste boiler (not illustrated) installed with an industrial waste incinerator, and the temperature of thermal water Wt is retained at the value of aforementioned 142.9°C by means of said heated steam S.

For a heat source of thermal water Wt it can he constituted that heat from a burner for heating separately installed or from an electric heater is utilised other than the constitution wherein steam from a boiler is utilised as shown.

When a boiler is installed, so-called continuous blow water from a boiler can be utilised as part of thermal water. When a deaerator is equipped with the boiler, water of high temperature and high pressure produced inside the deaerator can also be utilised as thermal water At or as part of thermal water Wt.

The aforementioned pump 3 is designed to supply thermal water Wt to a temperature reduction water nozzle 4. Said pump 3 is to be installed only when it is required in relation to pressure loss of the pipe between a thermal tank 2 and a temperature reduction water nozzle 4 and also in relation to a potential head of the temperature reduction water nozzle 4.

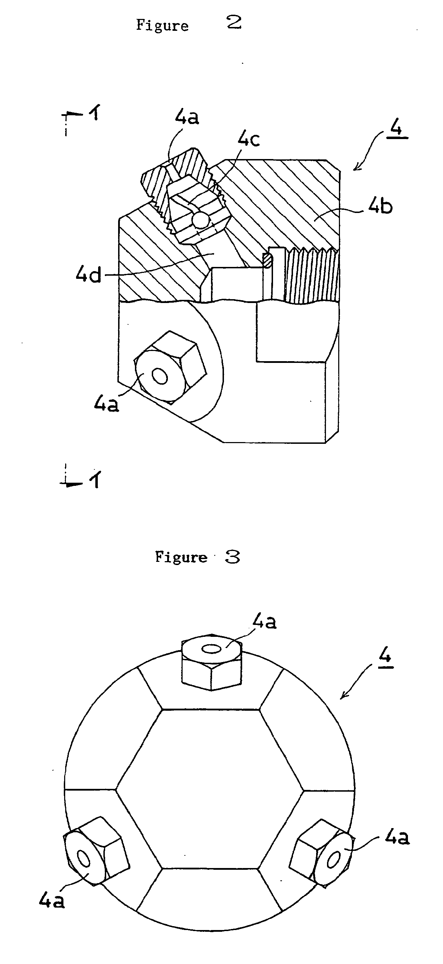

As illustrated in Fig. 2 and Fig. 3, the aforementioned nozzle 4 is of an open hollow cone type. In reference to Fig 2 and Fig 3, a nozzle equipped with 3 ejection mouths 4a at intervals of the angle of 120°C is mounted at the centre of the upper part of the gas cooling chamber 1.

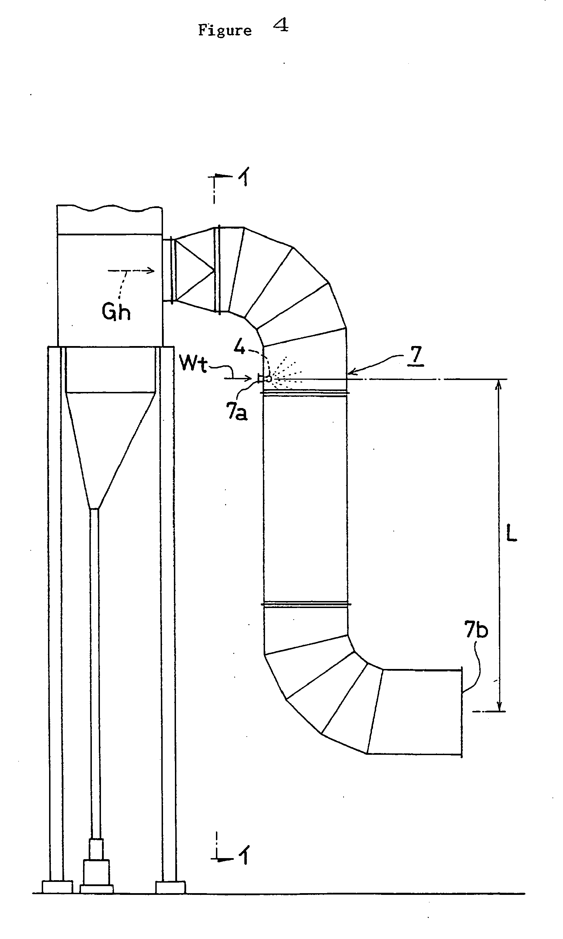

Referring to Fig. 2, 4b is a main body, 4c a screw and 4d a water lead-in hole.

An ejection angle of each ejection mouth 4a of the temperature reduction water nozzle 4 is fixed approximately at 60 (under the ejection pressure of 294 kPa (3kgf/cm²)) and the flow volume is fixed approximately at 0.063 L/s (3.8 l/min) (under the ejection pressure of 294 kPa (3kgf/cm²)).

Further, in reference to Fig.2, a hollow cone type spraying nozzle is utilised for a temperature reduction water nozzle 4. However, any kind, type or structure of a nozzle 4 can be chosen for applying to the present invention as long as it enables to produce spraying water with particle diameters of 190 - 300µm from previous water with the normal temperature under the pressure of 196 - 294 kPa (2 - 3kgf/cm²).

A temperature control device 5 receives temperature detection signals from an exhaust gas temperature detector 5b installed on the inlet side and an exhaust gas temperature detector 5a installed on the outlet side, adjusts the volume of thermal water to be sprayed into a gas cooling chamber 1 by menus of an opening and closing mechanism to control a temperature reduction water volume valve 6 and retain the temperature of low temperature exhaust gas Gl emitted from the exhaust gas outlet 1b at set values.

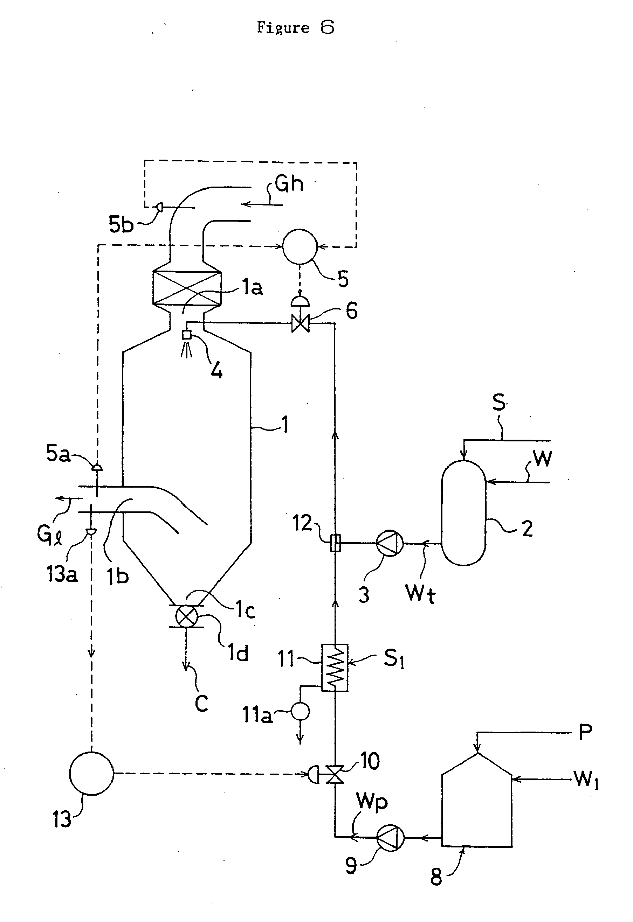

In reference to Fig 6, thermostat type temperature detectors are employed for the exhaust gas temperature detectors 5a,5b. However, they can be replaced with any kinds of detectors for its use.

A temperature reduction water volume control valve 6 is provided in a passage way for supplying thermal water. However, as illustrated in the previous Fig.6, a temperature reduction water volume control valve 6 can be provided in a return passage way of thermal water Wt. Any method of control can be applied as long as the volume of thermal water to be supplied to a temperature reduction water nozzle is able to be controlled.

At the time when the temperature of high temperature exhaust gas Gh from a combustion system is reduced, thermal water at in a thermal tank 2 is sent to a temperature reduction water nozzle 4 by means of internal pressure in the thermal tank 2 and/or pressurised power of water, and sprayed into high temperature exhaust gas Gh through the temperature reduction water nozzle.

Thermal water at sprayed through a temperature reduction water nozzle 4 becomes pressurised water having a temperature considerably higher than a boiling point (100°C) under atmospheric pressure, and abruptly boils under the reduced pressure in the vicinity of an ejection mouth 4a of the temperature reduction water nozzle 4, producing atomised spray particles having diameters of 50 - 5µm, and turns to steam instantly when evaporated, thus realising cooling of exhaust gas by means of the heat exchange with high temperature exhaust gas Gh in the gas cooling chamber 1.

Low temperature exhaust gas Gl cooled to the prescribed temperature is extracted through an exhaust gas outlet 1b outside, while ash C (dust and the like) separated in exhaust gas is discharged outside through an ash outlet 1c.

### Preferred Embodiment 1

A tower type device for temperature reduction equipped with a cylindrically shaped gas cooling chamber 1 is formed to reduce the temperature of high temperature exhaust gas Gh having the exhaust gas flow volume of 90, 000Nm³/H (exhaust gas from a waste heat boiler equipped with an industrial waste incinerator) and the temperature of 240°C to the temperature of 180°C. Under conditions that the temperature of thermal water is 142.9°C (saturated water of pressure 395 kPa (3kg/cm² G)), and the volume of thermal water to be sprayed is 2.5ton/hr, the required capacity of a gas cooling chamber 1 reaches 3000mm in an internal diameter and 6000mm in height, allowing the aforementioned high temperature exhaust gas Gh to be turned sufficiently to low temperature exhaust gas Gl of the prescribed temperature (180°C) by utilising said gas cooling chamber 1.

When exhaust gas under same conditions is treated with a previous tower type temperature reduction device (water of 20°C and the volume of water to be sprayed approximately 2ton/hr), the capacity of approximately 4800mm x 9000mmH was required for a gas cooling chamber, while a gas cooling chamber 1 is found to be able to be remarkably small in size.

According to the present invention, the volume of thermal water at to be sprayed increases approximately by 20% comparing with the previous case wherein water (20"C) is employed.

According to the present invention, there have not occurred any difficulties such as damages on a refractory due to adherence or deposit of duct and the like caused by adherence of water droplets to the wall surface of the gas cooling chamber, enabling highly stable and continuous temperature reduction of high temperature exhaust gas.

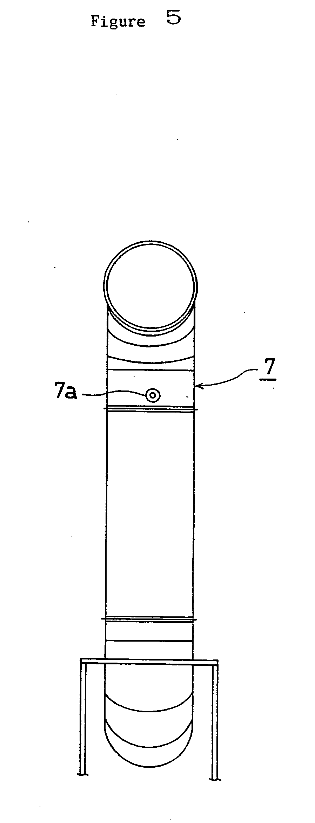

Referring to Fig.4 and Fig.5 according to the present invention, there is illustrated another embodiment for the method for temperature reduction of exhaust gas, wherein it is constituted that thermal water at is sprayed into high temperature exhaust gas Gh in a duct 7 through a temperature reduction water nozzle 4 attached to a flange 7a by installing said flange 7a for fixing a temperature reduction water nozzle 4 on the side of an exhaust gas duct 7 for the purpose of leading out high temperature exhaust gas Gh emitted out of a waste incinerator.

Referring now to Fig.4 and Fig.5, there remains exactly same as the constitution of the equipment shown in Fig.1 and Fig.2 except that the gas cooling chamber 1 shown in Fig.1 and Fig.2 is replaced by a vertical type exhaust gas duct 7.

### Preferred Embodiment 2

Under the conditions that saturated water of 142.9°C an 395 kPa (3kg/cm² G) is used as thermal water to be sprayed, the internal diameter of a duct is 2000mm and the length of the duct is 7000mm, by spraying thermal water at of 3.4ton/h into the duct 7 through a temperature reduction water nozzle 4, high temperature exhaust gas Gh of 90000Nm³/H and 240°C was able to be continuously turned to be low temperature exhaust gas Gl of approximately 180°C at the duct outlet 7b.

No adherence of water droplets to the inner surface of the duct 7 was observed, and accordingly no adherence and deposits of dust and the like caused by adherence of water droplets was confirmed.

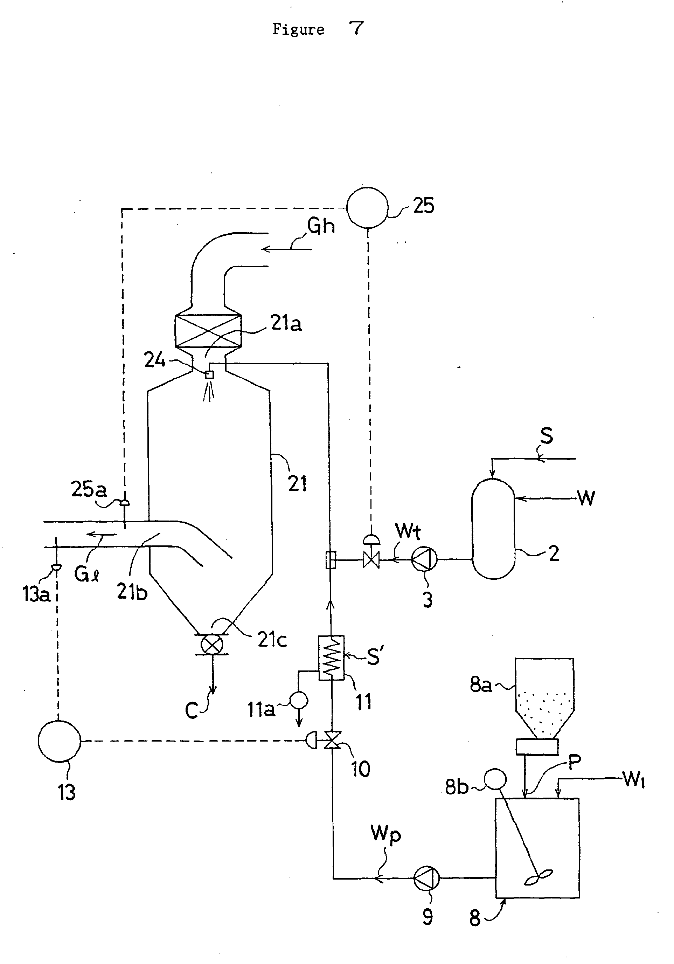

Referring to Fig.6 and Fig.7, there is illustrated the third embodiment for the method for temperature reduction of exhaust gas, wherein the temperature of exhaust gas is reduced and acid component in exhaust gas is removed (or neutralised) as well at the same time by means of spraying alkaline thermal water at into high temperature exhaust gas Gh in the gas cooling chamber 1 through a temperature reduction water nozzle 4.

Referring to Fig.6 and Fig.7, 8 is an alkaline solution tank, 8a an alkaline agent feeding device, 8b a stirrer, 9 an alkaline solution pump, 10 an alkaline solution flow volume control valve, 11 an alkaline solution heater, 11a a drain emission valve, 12 a mixer for thermal water Wt and alkaline solution Wp, 13 an acid gas concentration control device, 13a an acid gas concentration detector for low temperature exhaust gas Gl, S1 steam for heating, P alkaline agent, W1 Water and Wp alkaline solution. Excluding these components, all other equipment and devices remain exactly same as those shown in Fig.1 and Fig.2.

Referring to Fig.6, alkaline aqueous solution is used for alkaline solution Wp to be mixed into thermal water Wt. For example, alkaline aqueous solution, for which alkaline agent P such as sodium hydroxide (caustic soda, NaOH) and the like is dissolved into water W1 is stored in an alkaline solution tank 8.

For alkaline agent P that makes alkaline aqueous solution, it is not limited to aforementioned sodium hydroxide as long as it is water soluble. For example, magnesium hydroxide (Mg(OH)₂) and the like can also be used.

Further, the concentration of alkaline agent in alkaline aqueous solution stored in the tank 8 is appropriately chosen depending on the temperature of water W1 or solubility of the alkaline agent P in use to water W1. When sodium hydroxide is in use as alkaline agent P. alkaline concentration is chosen at the concentration 29 - 30%.

Referring now to the aforementioned Fig.7, alkaline slurry solution is in use as alkaline solution Wp to be mixed into thermal water Wt. For instance, the solid-liquid mixed body (slurry) wherein alkaline P such as calcium hydroxide (slaked lime Ca(OH)₂) and the like is suspended dispersively into water W1 stored in an alkaline solution tank 8.

Further, for alkaline agent P, it is not limited to aforementioned calcium hydroxide. For example, slaked lime (CaO), calcium carbonate (CaCO₃), sodium carbonate (Na₂CO₃) and the like can also be used.

The quantity of alkaline solution Wp to be mixed into aforementioned thermal, water at is adjusted by a mechanism to control an alkaline solution flow volume control valve 10 by opening and closing through an acid gas concentration control device 13 by receiving detection signals from an acid gas concentration detector 13 a in low temperature exhaust gas Gl, therewith acid gas concentration in the aforementioned low temperature exhaust gas Gl is maintained at a prescribed value.

The quantity of alkaline solution Wp to be sent to thermal water at is determined with the temperature of low temperature exhaust gas Gl, the type of acid gas to be removed, the targeted removal rate of acid gas and the like. Normally, 1.0 - 1.5 times volume of alkaline agent P in an equivalent ratio to the volume of acid gas to be removed in exhaust gas is mixed into thermal water Wt.

The aforementioned alkaline solution heater 11 is used to heat alkaline solution Wp to be mixed into thermal water Wt to a prescribed temperature, thus preventing the temperature of alkaline temperature reduction water flowing out of a mixer 12 from being exceedingly reduced.

When alkaline solution Wp to be mixed is small in amount or the temperature of alkaline solution is comparatively low (for example, 80 - 90°C), turbulence to thermal water at occurs at less frequency at the time of mixing. Accordingly, in such a case, the installation of the aforementioned alkaline solution heater 11 can be omitted.

Referring to Fig.6 and Fig.7, it is constituted that alkaline temperature reduction water is ejected into a gas cooling chamber 1. However, there is no need to say that it can constituted that alkaline temperature reduction water is ejected into an exhaust gas duct 7 shown in Fig.4 and Fig.5 instead of the aforementioned gas cooling chamber 1.

### Preferred Embodiment 3

A tower type device for temperature reduction e-tipped with a cylindrically shaped gas cooling chamber is formed to reduce the temperature of 240°C of high temperature exhaust gas Gh having the exhaust gas flow volume of 90,000Nm³/h (HCl concentration of exhaust gas from the waste heat boiler of the industrial waste incinerator 800ppm) to the temperature of 180°C. Under such conditions that the temperature of thermal water at is 142.9°C (saturated water of pressure 395 kPa (3kg/m² G)), the temperature of alkaline solution Wp (NaOH aqueous solution of concentration 25%) Wp is 25°C, the supply volume of thermal water Wt is 1.9ton/h, the supply volume of alkaline solution Wp is 0.606ton/h, the supply volume of alkaline thermal water to be sprayed is approximately 2.56ton/h, the required capacity of a gas cooling chamber 1 reaches 3000mm in the internal diameter and 6000mm in height, allowing the temperature of the aforementioned high temperature exhaust gas Gh to be reduced sufficiently to the prescribed temperature (180°C), to turn it to low temperature exhaust gas Gl.

The volume of alkaline agent P to be supplied to the HCI volume in exhaust gas is found, then, to be 1.0 at an equivalent ratio, while the removal rate of HCl detected by an acid gas concentration detector 13a is approximately 93% at the time when the temperature of low temperature exhaust gas Gl is 180C.

The volume of alkaline solution Wp to be supplied is calculated as follows: the HCl volume in exhaust gas 90,000 Nm³/h having HCl concentration of 800ppm is 9 x 104 x 800 x 10⁻⁶ = 72Nm³/h.

An equivalent/h of HCl of 72Nm³/h is 72/22.4 = 3.214kmol. Since an equivalent ratio is 1, an equivalent/h of NaOH to be supplied becomes 214kmol/hr. When NaOH of an equivalent/hr is supplied with NaOH aqueous solution Wp, the supply volume of NaOH aqueous solution becomes 40kg/kmol x 3.214kmol/h x 100/25 = 606kg/h.

The reaction formulas of removal of acid gas in exhaust gas by means of spraying aforementioned NaOH aqueous solution are as follows:

NaOH + HCl → NaCl + H₂O

NaOH + SO₂ +1/2 O₂ → Na₂SO₄ + H₂O

Produced NaCl and the like are after-treated by means of electrolysis and the like. Since these methods of treatments are already open to the public, the explanation is herewith omitted.

Taking into consideration the external turbulence to thermal water at the time of mixing alkaline solution (25% NaOH solution) Wp of the normal temperature (25°C), with reference to this embodiment, it is arranged that aforementioned alkaline solution Wp is first heated to the temperature of approximately 80°C by an alkaline solution heater 11, and then supplied to a mixer 12. However, even when the heater 11 is not in use, there occurred no particular difficulties except that the volume of sprayed water through a temperature reduction water nozzle 4 was slightly lowered due to the reason that the temperature of alkaline thermal water was reduced at the outlet side of the mixer 11.

When acid gas of high concentration is contained in exhaust gas, the mixing volume of alkaline solution at increases, thus further lowering the temperature of thermal water at after mixing. However, it has become apparent that the situation can be coped with by fixing the temperature of thermal water Wt slightly higher before mixing without installing a heater 11.

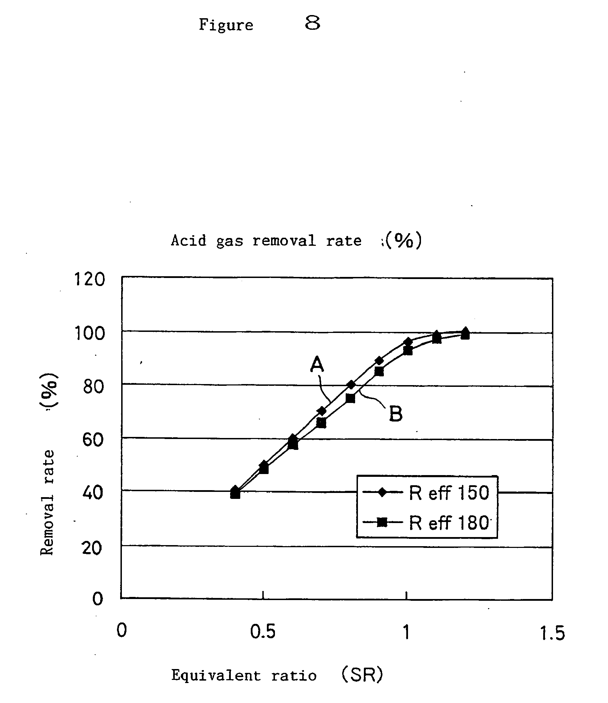

Referring to Fig.8 in the embodiment 3, changes in the removal rate of acid gas (HCl) is shown when the supply volume of NaOH aqueous solution Wp to be fed to a mixer changes. Curve A represents values when the temperature of low temperature gas Gl is fixed at 180°C, while curve B represents values when it is fixed at 150°C. The vertical axis of the curve is for acid gas removal rate (%), while the transverse axis is for the supply volume of NaOH shown in an equivalent ratio. As clearly indicated in Fig.8, the lower the temperature of low temperature exhaust gas the better the improvements of the removal rate. The table 1 shown in below indicates the concrete numerical values measured with the embodiment illustrated in Fig.8.

**Table 1**

| | Equivalent ratio | 0.4 | 0.5 | 0.6 | 0.7 | 0.8 | 0.9 | 1.0 | 1.1 | 1.2 |
|---|---|---|---|---|---|---|---|---|---|---|
| _{*}1 | HCl | | | | | | | | | |
| | Removal rate % | 40 | 50 | 60 | 70 | 80 | 89 | 96 | 99 | 100 |
| _{*}2 | HCl | | | | | | | | | |
| | Removal rate % | 39 | 48 | 57 | 66 | 75 | 85 | 93 | 97 | 99 |

| | | | | | | | | | | |
|---|---|---|---|---|---|---|---|---|---|---|
| _{*}1 Temperature of low temperature exhaust gas 150°C _{*}2 Temperature of low temperature exhaust gas 180°C | | | | | | | | | | |

### Effects of the Invention

With reference to the present invention, since pressurised thermal water is in use as temperature reduction water, sprayed thermal water boils abruptly in the vicinity of an ejection mouth of the temperature reduction water nozzle, thus producing atomised particles having diameters up to approximately 10µm, to turn to steam instantly when evaporated.

Accordingly, there are not seen such troubles caused by sprayed thermal water in the form of water droplets directly hitting and adhering to the wall surface of a gas cooling chamber, to eliminate damages on the wall surface of the gas cooling chamber due to the adherence of water droplets and difficulties due to the deposition of dust completely.

Further, cooling performance of sprayed water is greatly improved due to instant evaporation of sprayed herbal water, thus enabling to reduce the size of a gas cooling chamber remarkably. With regards to the previous gas cooling chamber that utilised water of normal temperature as temperature reduction water, heat load of the gas cooling chamber is normally approximately 20934 - 62802 KJ/m³H (5,000 - 15,000kcal/m³ H), while with regard to a gas cooling chamber according to the present invention, it is found possible to raise the heat load of the gas cooling chamber to 2.09 x 10² - 6.27 x 10² J/m³.H (50,000 - 150,000kcal/m³ H). This enables to reduce the size of the gas cooling chamber remarkably.

Furthermore, when sufficient pressure is found with a thermal water tank, a temperature boosting pump is not required. Therefore, the facilities can be constructed simply, thus allowing to reduce the running costs remarkably.

In the case that an incinerator or a boiler is equipped with a deaerator, thermal water of the deaerator can be utilised as it is. The only equipment that is needed for temperature reduction water is pipes from a temperature reduction water nozzle and a deaerator. This also allows to construct the equipment inexpensively.

Owing to the facts that the capacity of a gas cooling chamber can be made small and thermal water can be sprayed into a high temperature exhaust duct without installing a gas cooling chamber, installation costs can be reduced remarkably.

Further, with an incinerator equipped with a boiler and a waste heat boiler, the volume of chemical agents to be used for the equipment for desalinisation and desulfurisation of exhaust gas can also be reduced.

In the event that alkaline thermal water is supplied to a temperature reduction water nozzle, a high removal rate of acid gas contained in exhaust gas can be achieved with less amount of alkaline agents, thus resulting in making an acid gas removal equipment installed on the downstream side of the device for temperature reduction of exhaust gas smaller in size as well as in reducing the amount of agents to be used considerably.

Further, alkaline solution to be mixed into thermal water is not required to make it high in temperature by heating. The stable operation of the device for temperature reduction of exhaust gas can be realised by fixing the temperature of thermal water slightly higher while mixing alkaline solution of normal temperature into thermal water.

As explained above, the present invention achieves excellent and practical effects.

## Claims

1. A method for temperature reduction of exhaust gas (Gh) in an incinerator or boiler equipment by spraying water, through a temperature reduction nozzle (4), into said exhaust gas (Gh), **characterised in that** the water is pressurized thermal water with a temperature higher than the boiling point of water under atmospheric pressure.

2. A method for temperature reduction of exhaust gas (Gh) as claimed in claim 1, further comprising spraying pressurised thermal water as temperature reduction water into a gas cooling chamber (1) or an exhaust gas duct.

3. A method for temperature reduction of exhaust gas (Gh) by making use of thermal water as claimed in claim 1 or claim 2 in which thermal water taken out of a deaerator or continuous blow water from a boiler is utilised as part of pressurised thermal water.

4. A method for temperature reduction of exhaust gas (Gh) by making use of thermal water as claimed in claim 1, claim 2 or claim 3, in which pressurised thermal water comprising steam is used as temperature reduction water.

5. A method for temperature reduction of exhaust gas (Gh) by making use of thermal water as claimed in claim 1 or claim 2, in which pressurised thermal water containing an alkaline solution is used as temperature reduction water.

6. A method for temperature reduction of exhaust gas (Gh) by making use of thermal water as claimed in claim 5, in which a heated alkaline solution is mixed into thermal water.

7. A method for temperature reduction of exhaust gas (Gh) by making use of thermal water as claimed in claim 5 or claim 6, in which an alkaline solution is used as alkaline aqueous solution or alkaline slurry solution.

8. A method for temperature reduction of exhaust gas (Gh) by making use of thermal water as claimed in claim 7, in which alkaline solution is used as aqueous solution containing sodium hydroxide (caustic soda) or alkaline slurry solution is used as slurry solution containing calcium hydroxide (slaked lime).

## Patentansprüche

1. Ein Verfahren zur Temperaturreduzierung von Abgas (Gh) in einer Brennkammer oder Boilereinrichtung mittels Sprühen von Wasser durch eine Temperaturreduzierdüse (4) in das Abgas (Gh), **dadurch gekennzeichnet, dass** das Wasser unter Druck gesetztes Warmwasser mit einer Temperatur ist, die höher ist als die Siedetemperatur von Wasser unter atmosphärischem Druck.

2. Ein Verfahren zur Temperaturreduzierung von Abgas (Gh) gemäß Anspruch 1, weiterhin umfassend: Sprühen von unter Druck gesetztem Warmwasser als Temperaturreduzierwasser in eine Gaskühlkammer (1) oder eine Abgasleitung.

3. Ein Verfahren zur Temperaturreduzierung von Abgas (Gh) unter Verwendung von Warmwasser gemäß Anspruch 1 oder Anspruch 2, bei dem Warmwasser aus einem Entgaser genommen wird oder beständiges Abblaswasser von einem Boiler als Teil von unter Druck gesetztem Warmwasser verwendet wird.

4. Ein Verfahren zur Temperaturreduzierung von Abgas (Gh) unter Verwendung von Warmwasser gemäß Anspruch 1, Anspruch 2 oder Anspruch 3, bei dem unter Druck gesetztes Warmwasser als Temperaturreduzierwasser verwendet wird, das Dampf umfasst.

5. Ein Verfahren zur Temperaturreduzierung von Abgas (Gh) unter Verwendung von Warmwasser gemäß Anspruch 1 oder Anspruch 2, bei dem unter Druck gesetztes Warmwasser als Temperaturreduzierwasser verwendet wird, das eine alkalische Lösung enthält.

6. Ein Verfahren zur Temperaturreduzierung von Abgas (Gh) unter Verwendung von Warmwasser gemäß Anspruch 5, bei dem eine erwärmte alkalische Lösung in das Warmwasser gemischt wird.

7. Ein Verfahren zur Temperaturreduzierung von Abgas (Gh) unter Verwendung von Warmwasser gemäß Anspruch 5 oder Anspruch 6, bei dem eine alkalische Lösung als alkalische wässrige Lösung oder alkalische Suspensionslösung verwendet wird.

8. Ein Verfahren zur Temperaturreduzierung von Abgas (Gh) unter Verwendung von Warmwasser gemäß Anspruch 7, bei dem die alkalische Lösung als eine wässrige Lösung verwendet wird, die Natriumhydroxid (kaustisches Soda) enthält, oder die alkalische Suspensionslösung wird als Suspensionslösung verwendet, die Calciumhydroxid (gelöschter Kalk) enthält.

## Revendications

1. Procédé de réduction de température de gaz d'échappement (Gh) dans un incinérateur ou un équipement de chaudière par pulvérisation d'eau, à travers une buse de réduction de température (4) dans ledit gaz d'échappement (Gh), **caractérisé en ce que** l'eau est de l'eau thermale sous pression à une température supérieure au point d'ébullition de l'eau sous pression atmosphérique.

2. Procédé de réduction de température de gaz d'échappement (Gh) selon la revendication 1, comprenant en outre la pulvérisation d'eau thermale sous pression en tant qu'eau de réduction de température dans une chambre de refroidissement de gaz (1) ou un conduit de gaz d'échappement.

3. Procédé de réduction de température de gaz d'échappement (Gh) à l'aide d'eau thermale selon la revendication 1 ou la revendication 2, dans lequel de l'eau thermale sortie d'un dégazeur ou de l'eau à purge continue d'une chaudière est utilisée comme partie de l'eau thermale sous pression.

4. Procédé de réduction de température de gaz d'échappement (Gh) à l'aide d'eau thermale selon la revendication 1, la revendication 2 ou la revendication 3, dans lequel de l'eau thermale sous pression comprenant de la vapeur est utilisée en tant qu'eau de réduction de température.

5. Procédé de réduction de température de gaz d'échappement (Gh) à l'aide d'eau thermale selon la revendication 1 ou la revendication 2, dans lequel de l'eau thermale sous pression contenant une solution alcaline est utilisée en tant qu'eau de réduction de température.

6. Procédé de réduction de température de gaz d'échappement (Gh) à l'aide d'eau thermale selon la revendication 5, dans lequel une solution alcaline chauffée est mélangée dans de l'eau thermale.

7. Procédé de réduction de température de gaz d'échappement (Gh) à l'aide d'eau thermale selon la revendication 5 ou la revendication 6, dans lequel une solution alcaline est utilisée en tant que solution aqueuse alcaline ou solution de suspension épaisse alcaline.

8. Procédé de réduction de température de gaz d'échappement (Gh) à l'aide d'eau thermale selon la revendication 7, dans lequel une solution alcaline est utilisée en tant que solution aqueuse contenant de l'hydroxyde de sodium (soude caustique) ou une solution de suspension épaisse alcaline est utilisée en tant que solution de suspension épaisse contenant de l'hydroxyde de calcium (chaux hydratée).
